# EUROPEAN PATENT APPLICATION

(11) **EP 4 535 911 A1**
(43) Date of publication of application: **09.04.2025**
(21) Application number: 22944302.3
(22) Date of filing: 01.06.2022
(51) Int. Cl.: H04W 74/08, H04W 72/04

(54) **MULTI-PRACH TRANSMISSION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/096709
(87) International publication number: WO 2023/230971

(57) **Abstract**

The embodiments of the present disclosure can be applied to the technical field of communications. Disclosed are a multi-PRACH transmission method and apparatus. The method comprises: determining a trigger condition for multi-PRACH transmission; and triggering the multi-PRACH transmission according to the trigger condition for multi-PRACH transmission, wherein the multi-PRACH transmission is used for instructing a terminal device to perform transmission by means of a plurality of PRACHs when sending a random access Msg1 or MsgA, such that when the trigger condition for multi-PRACH transmission is met, transmission is performed by means of the plurality of PRACHs during the sending of a plurality of random access messages, thereby improving the utilization rate of resources and improving the transmission efficiency.

## Description

### TECHNICAL FIELD

The present disclosure relates to the field of wireless communication technology, in particular to a multi-physical random access channel (PRACH) transmission method and apparatus.

### BACKGROUND

The physical random access channel (PRACH) is an uplink physical random access channel. In order to improve coverage of the PRACH channel, the 3rd generation partnership project (3GPP) release 18 (R18) is preparing to formulate a scheme based on a multi-PRACH transmission, that is, a terminal performs multiple PRACH transmissions when sending a random access message. Currently, this release does not address the issue of triggering the multi-PRACH transmission.

### SUMMARY

The present disclosure provides a multi-PRACH transmission method and apparatus, which may applied to the field of communication technology, achieve triggering a multi-PRACH transmission according to a triggering conditions for the multi-PRACH transmission after determining the triggering conditions for the multi-PRACH transmission, in which the multi-PRACH transmission is used to indicate that a terminal performs multiple PRACH transmissions when sending Msg1 or MsgA for a random access, so that multiple PRACH transmissions can be performed when sending multiple random access messages in case of reaching the triggering condition for the multi-PRACH transmission, to improve resource utilization and transmission efficiency.

According to a first aspect of embodiments of the disclosure, a multi-PRACH transmission method is provided, the method is executed by a terminal and includes: determining a triggering condition for a multi-PRACH transmission; and triggering the multi-PRACH transmission according to the triggering condition for the multi-PRACH transmission, in which the multi-PRACH transmission is used to indicate that the terminal performs multiple PRACH transmissions when sending Msg1 or MsgA for a random access.

In an implementation, triggering the multi-PRACH transmission according to the triggering condition for the multi-PRACH transmission comprises: triggering the multi-PRACH transmission in response to reaching the triggering condition, wherein a first PRACH resource is configured for the multi-PRACH transmission, and the triggering condition is that a bandwidth part (BWP) initiating the random access is configured with the first PRACH resource.

In an implementation, triggering the multi-PRACH transmission in response to reaching the triggering condition comprises: triggering the multi-PRACH transmission in response to the BWP being configured with the first PRACH resource only.

In an implementation, triggering the multi-PRACH transmission in response to reaching the triggering condition comprises: triggering the multi-PRACH transmission in response to the first PRACH resource comprising only a second PRACH resource and the terminal having a coverage enhancement (CE) characteristic; wherein the second PRACH resource is a PRACH resource available to a terminal having the CE characteristic.

In an implementation, triggering the multi-PRACH transmission according to the triggering condition for the multi-PRACH transmission comprises: determining whether the multi-PRACH transmission is in an enabled state; and triggering the multi-PRACH transmission in response to reaching the triggering condition, wherein the triggering condition is that the multi-PRACH transmission is in the enabled state.

In an implementation, determining whether the multi-PRACH transmission is in the enabled state comprises: determining that the multi-PRACH transmission is in the enabled state in response to receiving first indication information from a network device; wherein the first indication information is used to indicate that the terminal is allowed to perform the multiple PRACH transmission.

In an implementation, determining whether the multi-PRACH transmission is in the enabled state comprises: determining that the multi-PRACH transmission is in the enabled state in response to the terminal being configured with a first PRACH resource or the terminal being configured with a first transmission mode; wherein the first PRACH resource is configured for the multi-PRACH transmission; the first transmission mode is configured for the multi-PRACH transmission.

In an implementation, the first transmission mode comprises at least one of following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

In an implementation, triggering the multi-PRACH transmission according to the triggering condition for the multi-PRACH transmission comprises: triggering the multi-PRACH transmission in response to reaching the triggering condition, wherein the triggering condition is that a reference signal receiving power (RSRP) value of a downlink pathloss reference point satisfies a first RSRP triggering threshold.

In an implementation, the first RSRP triggering threshold is an RSRP triggering threshold configured by a network device for the multi-PRACH transmission.

In an implementation, the first RSRP triggering threshold is an RSRP triggering threshold configured by the network device only for the multi-PRACH transmission; or the first RSRP triggering threshold is an RSRP triggering threshold configured by the network device for both the multi-PRACH transmission and a Msg3 repetition.

In an implementation, the first RSRP triggering threshold is an RSRP triggering threshold configured by the network device for a Msg3 repetition of the terminal having a CE characteristic.

In an implementation, there are a plurality of first RSRP triggering thresholds, and there are a plurality of BWPs, wherein each BWP is configured with a plurality of first PRACH resources, the first PRACH resource is configured for the multi-PRACH transmission; wherein the plurality of first RSRP triggering thresholds have a one-to-one correspondence with the plurality of BWPs, or the plurality of first RSRP triggering thresholds have a one-to-one correspondence with the plurality of first PRACH resources.

In an implementation, the first RSRP triggering threshold is carried in a system message or in a first radio resource control (RRC) message; wherein the first RRC message comprises at least one of following RRC messages: an RRCReconfiguration message, an RRCResume message, an RRCRelease message or an RRCSetup message.

In an implementation, the first RSRP triggering threshold is carried in at least one of following resource configurations: a common PRACH resource configuration, a PRACH resource configuration corresponding to a characteristic combination or a dedicated PRACH resource configuration; wherein the characteristic combination comprises a CE characteristic.

In an implementation, a type of the random access is a contention-based random access type; wherein the common PRACH resource configuration comprises a common PRACH resource configuration of at least one BWP; the dedicated PRACH resource configuration comprises at least one of following configurations: a beam failure recovery (BFR) configuration, or a RACH-ConfigDedicated configuration.

In an implementation, a type of the random access is a contention free random access (CFRA) type, and the first RSRP triggering threshold is carried in the dedicated PRACH resource configuration; wherein the dedicated PRACH resource configuration comprises at least one of following configurations: a CFRA resource configuration for BFR, a CFRA resource configuration for handover or a CFRA resource configuration for primary secondary cell (PSCell) addition or change.

In an implementation, triggering the multi-PRACH transmission according to the triggering condition for the multi-PRACH transmission comprises: triggering the multi-PRACH transmission and a Msg3 repetition in response to reaching the triggering condition, wherein the triggering condition is that an RSRP value of a downlink pathloss reference point satisfies a first RSRP triggering threshold, and the first RSRP triggering threshold is an RSRP triggering threshold configured by a network device for both the multi-PRACH transmission and the Msg3 repetition.

In an implementation, triggering the multi-PRACH transmission according to the triggering condition for the multi-PRACH transmission comprises: determining a triggering occasion of the multi-PRACH transmission; and triggering the multi-PRACH transmission according to the triggering condition for the multi-PRACH transmission at the triggering occasion.

In an implementation, the triggering occasion is any one of following occasions: an occasion after a carrier selection in a random access procedure, an occasion after a BWP selection in a random access procedure, or an occasion after an SSB selection in a random access procedure.

In an implementation, the occasion after the BWP selection in the random access procedure comprises any one of following occasions: an occasion before a random access (RA) type selection in the random access procedure, or an occasion after an RA type selection in the random access procedure.

In an implementation, the triggering occasion is the occasion after the BWP selection in the random access procedure, the method further comprises: triggering a Msg3 repetition according to a triggering condition for the Msg3 repetition in response to the triggering condition for the multi-PRACH transmission being used only for the multi-PRACH transmission; or triggering a Msg3 repetition while triggering the multi-PRACH transmission, in response to the triggering condition for the multi-PRACH transmission being used for an RSRP triggering threshold for both the multi-PRACH transmission and the Msg3 repetition.

In an implementation, the triggering occasion is the occasion after the BWP selection in the random access procedure, the method further comprises: triggering a Msg3 repetition according to a triggering condition for the Msg3 repetition at the triggering occasion before triggering the multi-PRACH transmission according to the triggering condition for the multi-PRACH transmission, in response to the triggering condition for the multi-PRACH transmission being used only for the multi-PRACH transmission; or triggering a Msg3 repetition while triggering the multi-PRACH transmission, in response to the triggering condition for the multi-PRACH transmission being used for an RSRP triggering threshold for both the multi-PRACH transmission and the Msg3 repetition.

According to a second aspect of embodiments of the disclosure, a multi-PRACH transmission method is provided, the method is performed by a network device and includes: receiving Msg1 or MsgA sent by a terminal based on a multi-PRACH transmission; in which the multi-PRACH transmission is initiated by the terminal based on a triggering condition.

In an implementation, the triggering condition is that a bandwidth part (BWP) initiating a random access is configured with a first PRACH resource; the first PRACH resource is configured for the multi-PRACH transmission.

In an implementation, the triggering condition is that the BWP initiating the random access is configured with the first PRACH resource only; or the triggering condition is that the first PRACH resource comprises only a second PRACH resource and the terminal has a coverage enhancement (CE) characteristic; wherein the second PRACH resource is a PRACH resource available to a terminal having the CE characteristic.

In an implementation, the triggering condition is that the multi-PRACH transmission is in an enabled state.

In an implementation, the method further includes: sending first indication information to the terminal, wherein the first indication information is used to indicate that the terminal is allowed to perform the multiple PRACH transmission.

In an implementation, the method further includes: configuring a first PRACH resource for the terminal, or configuring a first transmission mode for the terminal; wherein the first PRACH resource is configured for the multi-PRACH transmission; the first transmission mode is configured for the multi-PRACH transmission.

In an implementation, the first transmission mode comprises at least one of following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

In an implementation, the triggering condition is that a reference signal receiving power (RSRP) value of a downlink pathloss reference point satisfies a first RSRP triggering threshold.

In an implementation, the method further includes: configuring, for the terminal, the first RSRP triggering threshold for the multi-PRACH transmission.

In an implementation, configuring, for the terminal, the RSRP triggering threshold for the multi-PRACH transmission comprises: configuring, for the terminal, the first RSRP triggering threshold for the multi-PRACH transmission only; or configuring, for the terminal, the first RSRP triggering threshold for both the multi-PRACH transmission and a Msg3 repetition.

In an implementation, the method further includes: configuring, for the terminal having a CE characteristic, the first RSRP triggering threshold for a Msg3 repetition.

In an implementation, there are a plurality of first RSRP triggering thresholds, and there are a plurality of BWPs, wherein each BWP is configured with a plurality of first PRACH resources, the first PRACH resource is configured for the multi-PRACH transmission; wherein the plurality of first RSRP triggering thresholds have a one-to-one correspondence with the plurality of BWPs, or the plurality of first RSRP triggering thresholds have a one-to-one correspondence with the plurality of first PRACH resources.

In an implementation, configuring, for the terminal, the first RSRP triggering threshold for the multi-PRACH transmission comprises: sending a system message to the terminal, wherein the system message carries the first RSRP triggering threshold; or sending a first radio resource control (RRC) message to the terminal, wherein the first RRC message carries the first RSRP triggering threshold; wherein the first RRC message comprises at least one of following RRC messages: an RRCReconfiguration message, an RRCResume message, an RRCRelease message or an RRCSetup message.

In an implementation, configuring, for the terminal, the first RSRP triggering threshold for the multi-PRACH transmission comprises: sending a common PRACH resource configuration to the terminal, wherein the common PRACH resource configuration carries the first RSRP triggering threshold; or sending a PRACH resource configuration corresponding to a characteristic combination to the terminal, wherein the PRACH resource configuration corresponding to the characteristic combination carries the first RSRP triggering threshold, and the characteristic combination comprises a CE characteristic; or sending a dedicated PRACH resource configuration to the terminal, wherein the dedicated PRACH resource configuration carries the first RSRP triggering threshold.

In an implementation, a type of the random access is a contention-based random access type; wherein the common PRACH resource configuration comprises a common PRACH resource configuration of at least one BWP; the dedicated PRACH resource configuration comprises at least one of following configurations: a beam failure recovery (BFR) configuration, or a RACH-ConfigDedicated configuration.

In an implementation, a type of the random access is a contention free random access (CFRA) type, and the first RSRP triggering threshold is carried in the dedicated PRACH resource configuration; wherein the dedicated PRACH resource configuration comprises at least one of following configurations: a CFRA resource configuration for BFR, a CFRA resource configuration for handover or a CFRA resource configuration for primary secondary cell (PSCell) addition or change.

According to a third aspect of embodiments of the disclosure, a multi-PRACH transmission apparatus is provided, the apparatus is applied to a terminal and includes a processing unit. The processing unit is configured to determine a triggering condition for a multi-PRACH transmission; and trigger the multi-PRACH transmission according to the triggering condition for the multi-PRACH transmission, in which the multi-PRACH transmission is used to indicate that the terminal performs multiple PRACH transmissions when sending Msg1 or MsgA for a random access.

According to a fourth aspect of embodiments of the disclosure, a multi-PRACH transmission apparatus is provided, the apparatus is applied to a network device and includes a transceiver unit. The transceiver unit is configured to receive Msg1 or MsgA sent by a terminal based on a multi-PRACH transmission, in which the multi-PRACH transmission is initiated by the terminal based on a triggering condition.

According to a fifth aspect of embodiments of the disclosure, a communication apparatus is provided, including: a processor and a memory for storing computer programs, when the computer programs stored in the memory are executed by the processor, the communication apparatus is caused to execute the method according to the first aspect of embodiments of the disclosure.

According to a sixth aspect of embodiments of the disclosure, a communication apparatus is provided, including: a processor and a memory for storing computer programs, when the computer programs stored in the memory are executed by the processor, the communication apparatus is caused to execute the method according to the above second aspect of embodiments of the disclosure.

According to a seventh aspect of embodiments of the disclosure, a communication apparatus is provided, including: a processor and an interface circuit, in which the interface circuit is configured to receive code instructions and transmit the code instructions to the processor; and the processor is configured to run the code instructions to cause the communication apparatus to execute the method according to the first aspect of embodiments of the disclosure.

According to an eighth aspect of embodiments of the disclosure, a communication apparatus is provided, including: a processor and an interface circuit, in which the interface circuit is configured to receive code instructions and transmit the code instructions to the processor; and the processor is configured to run the code instructions to cause the communication apparatus to execute the method according to the second aspect of embodiments of the disclosure.

According to a ninth aspect of embodiments of the disclosure, a communication system is provided. The system includes the communication apparatus described in the fifth aspect, the communication apparatus described in the sixth aspect; or the system includes the communication apparatus described in the seventh aspect, the communication apparatus described in the eighth aspect.

According to a tenth aspect of embodiments of the disclosure, a computer-readable storage medium for storing instructions used by the above terminal is provided, in which when the instructions are executed, the terminal is caused to perform the method according to the first aspect of embodiments of the disclosure.

According to an eleventh aspect of embodiments of the disclosure, a computer-readable storage medium for storing instructions used by the above network device is provided, in which when the instructions are executed, the network device is caused to perform the method according to the second aspect of embodiments of the disclosure.

According to a twelfth aspect of the embodiments of the present disclosure, a computer program product including computer programs is provided. When the computer programs are executed by a computer, the computer is caused to perform the method according to the first aspect of embodiments of the disclosure.

According to a thirteenth aspect of the embodiments of the present disclosure, a computer program product including computer programs is provided. When the computer programs are executed by a computer, the computer is caused to perform the method according to the second aspect of embodiments of the disclosure.

According to a fourteenth aspect of the embodiments of the present disclosure, a chip system is provided. The chip system includes at least one processor and an interface for supporting the terminal in realizing the functions involved in the first aspect, e.g., determining or processing at least one of data or information involved in the method described above. In a possible design, the chip system further includes a memory. The memory is configured to store necessary computer programs and data of the terminal. The chip system may consist of chips or may include a chip and other discrete devices.

According to a fifteenth aspect of the embodiments of the present disclosure, a chip system is provided. The chip system includes at least one processor and an interface for supporting the network device in realizing the functions involved in the second aspect, e.g., determining or processing at least one of data or information involved in the method described above. In a possible design, the chip system further includes a memory. The memory is configured to store necessary computer programs and data of the network device. The chip system may consist of chips or may include a chip and other discrete devices.

According to a sixteenth aspect of the embodiments of the present disclosure, a computer program is provided. When the computer program is running on a computer, the computer is caused to perform the method according to the first aspect of embodiments of the disclosure.

According to a seventeenth aspect of the embodiments of the present disclosure, a computer program is provided. When the computer program is running on a computer, the computer is caused to perform the method according to the first aspect of embodiments of the disclosure.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system according to an embodiment.
FIG. 2 is a flowchart of a multi-PRACH transmission method according to an embodiment of the disclosure.
FIG. 3 is a flowchart of a multi-PRACH transmission method according to another embodiment of the disclosure.
FIG. 4 is a flowchart of a multi-PRACH transmission method according to another embodiment of the disclosure.
FIG. 5 is a flowchart of a multi-PRACH transmission method according to an embodiment of the disclosure.
FIG. 6 is a flowchart of a multi-PRACH transmission method according to another embodiment of the disclosure.
FIG. 7 is a flowchart of a multi-PRACH transmission method according to another embodiment of the disclosure.
FIG. 8 is a flowchart of a multi-PRACH transmission method according to an embodiment of the disclosure.
FIG. 9 is a flowchart of a multi-PRACH transmission method according to another embodiment of the disclosure.
FIG. 10 is a flowchart of a multi-PRACH transmission method according to another embodiment of the disclosure.
FIG. 11 is a flowchart of a multi-PRACH transmission method according to another embodiment of the disclosure.
FIG. 12 is a block diagram of a multi-PRACH transmission method apparatus according to an embodiment of the disclosure.
FIG. 13 is a block diagram of a multi-PRACH transmission method apparatus according to another embodiment of the disclosure.
FIG. 14 is a block diagram of a communication apparatus according to an embodiment of the disclosure.
FIG. 15 is a block diagram of a chip according to an embodiment of the disclosure.

### DETAILED DESCRIPTION

For ease of understanding, the terms involved in the disclosure are introduced firstly.

### 1. Physical Random Access Channel (PRACH)

The PRACH is an uplink physical random access channel, and the PRACH forms a mapping relationship with a random access channel (RACH).

### 2. MsgA

The MsgA is the first message of a two-step random access procedure. The first step of the two-step random access includes an uplink MsgA transmission, which includes contents equivalent to those of Msg1 and Msg3 of a four-step random access.

### 3. Reference Signal Receiving Power (RSRP)

The RSRP is a key parameter that can represent wireless signal strength in a wireless communication network and one of physical layer measurement requirements. The RSRP is an average of a signal power received on all resource elements (REs) carrying reference signals within a certain symbol.

In order to better understand a multi-PRACH transmission method disclosed in the embodiments of the present disclosure, a communication system to which the embodiments of the present disclosure can be applied is first described below.

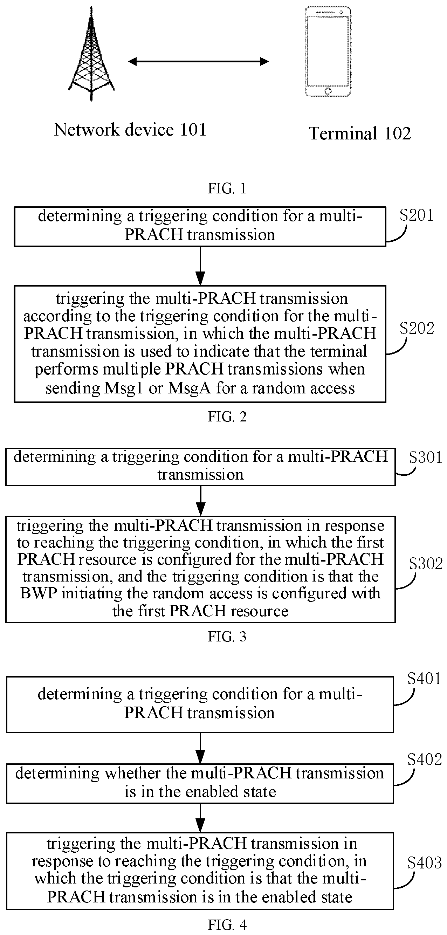

Referring to FIG. 1, FIG. 1 shows a schematic structural diagram of a communication system provided according to an embodiment of the present disclosure. The communication system can include, but is not limited to one network device and one terminal, the number and form of devices shown in FIG. 1 are only intended to illustrate, rather than to constitute limitations on the embodiments of the present application. In actual applications, two or more network devices and two or more terminals can be included. The communication system shown in FIG. 1 is illustrated to include one network device 101 and one terminal 102.

It should be noted that the technical solutions of the embodiments of the present disclosure can be applied to various communication systems, for example, a long term evolution (LTE) system, a 5th generation (5G) mobile communication system, a 5G new radio (NR) system, or other future novel mobile communication systems.

The network device 101 in the embodiment of the present disclosure is an entity for transmitting or receiving signals at a network side. For example, the network device 101 can be an evolved NodeB (eNB), a transmission reception point (TRP), a next generation NodeB (gNB) in the NR system, a base station in other future mobile communication systems or an access point in a wireless network (Wi-Fi^{™}) system, etc. In the embodiments of the present disclosure, a specific technology and a specific device adopted by the network device are not limited. The network device provided in the embodiment of the present disclosure can be composed of a central unit (CU) and a distributed unit (DU), and the CU can also be referred to as a control unit, the protocol layer of the network side device, such as a base station, can be split by adopting a CU-DU structure, parts of functions of the protocol layer are centrally controlled by the CU, and parts or all of remaining functions of the protocol layer are distributed in the DU, and the DU is centrally controlled by the CU.

The terminal 102 in the embodiment of the present disclosure is an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present disclosure, a specific technology and a specific device form that are adopted by the terminal are not limited.

It can be understood that the communication system described in the embodiment of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

The NR (New Radio) supports configuring different PRACH resources for terminals with different characteristic combinations. The characteristic combination supports a combination of following characteristics: coverage enhancement, reduced capability (RedCap), small data transmission (SDT), Slice. The characteristic combination can also support a combination of some of the above characteristics, such as coverage enhancement and RedCap.

For the random access procedure, the execution sequence of an existing protocol can be described as follows: firstly, a carrier selection is performed; then a bandwidth part (BWP) selection is performed; after the BWP selection, a random access (RA) type selection is performed; finally, a single sideband (SSB) selection is performed.

The multi-PRACH transmission method and apparatus provided by the present disclosure will be introduced in detail below with reference to the accompanying drawings.

Referring to FIG. 2, FIG. 2 is a flowchart of a multi-PRACH transmission method according to an embodiment of the disclosure. The method may be performed by the terminal shown in FIG. 1.

As illustrated in FIG. 2, the method may include, but not limited to, the following steps.

At step 201, a triggering condition for a multi-PRACH transmission is determined.

In the embodiments of the present disclosure, the multi-PRACH transmission refers to two or more PRACH transmissions. In an implementation, the multi-PRACH transmission may be two or more PRACH transmissions in parallel.

In the embodiments of the present disclosure, the triggering condition for the multi-PRACH transmission refers to a condition for triggering the multi-PRACH transmission. It should be noted that the triggering condition for the multi-PRACH transmission is a necessary condition, that is, the multi-PRACH transmission is triggered only when the triggering condition for the multi-PRACH transmission in the embodiments of the present disclosure is satisfied. In an implementation, the triggering condition for the multi-PRACH transmission can be considered as a sufficient condition, that is, as long as the triggering condition for the multi-PRACH transmission in the embodiments of the present disclosure is satisfied, the multi-PRACH transmission is triggered. In another implementation, the triggering condition for the multi-PRACH transmission can be considered as a non-sufficient condition, that is, in addition to satisfying the triggering condition for the multi-PRACH transmission in the embodiments of the present disclosure, other conditions need to be satisfied to trigger the multi-PRACH transmission. The other conditions may be conditions determined based on a communication protocol or a configuration of a base station or any other means. The above implementations can be applied in all embodiments of the present disclosure, which will not be described again.

In the embodiments of the present disclosure, the triggering condition may include at least one of the following conditions: a BWP initiating a random access being configured with a first PRACH resource, the multi-PRACH transmission being in an enabled state, or a reference signal receiving power (RSRP) value of a downlink pathloss reference point satisfying a first RSRP triggering threshold.

In an example, the triggering condition may include any one of the above conditions. For example, the triggering condition is that the BWP initiating a random access is configured with the first PRACH resource; or the triggering condition is that the multi-PRACH transmission is in the enabled state; or the triggering condition is that the RSRP value of the downlink pathloss reference point satisfies the first RSRP triggering threshold.

In another example, the triggering condition may include any two of the above conditions. For example, the triggering condition may include that the BWP initiating a random access is configured with the first PRACH resource and the multi-PRACH transmission is in the enabled state. For another example, the triggering condition may include that the BWP initiating a random access is configured with the first PRACH resource and the RSRP value of the downlink pathloss reference point satisfies the first RSRP triggering threshold. For another example, the triggering condition may include that the multi-PRACH transmission is in the enabled state and the RSRP value of the downlink pathloss reference point satisfies the first RSRP triggering threshold.

In another example, the triggering condition may include three of the above conditions. For example, the triggering condition may include that the BWP initiating a random access is configured with the first PRACH resource, the multi-PRACH transmission is in the enabled state, and the RSRP value of the downlink pathloss reference point satisfies the first RSRP triggering threshold.

At step 202, the multi-PRACH transmission is triggered according to the triggering condition for the multi-PRACH transmission, in which the multi-PRACH transmission is used to indicate that the terminal performs multiple PRACH transmissions when sending Msg1 or MsgA for a random access.

With the multi-PRACH transmission method provided in the embodiment of the present disclosure, the terminal determines the triggering condition for the multi-PRACH transmission, and triggers the multi-PRACH transmission according to the triggering condition for the multi-PRACH transmission. The multi-PRACH transmission is used to indicate that the terminal performs multiple PRACH transmissions when sending Msg1 or MsgA for the random access. In this way, in a case that the triggering condition for the multi-PRACH transmission is reached, the multiple PRACH transmissions can be performed when multiple random access messages are sent, to improve resource utilization and transmission efficiency.

**It** should be noted that the above possible implementations can be executed individually or in combination, which is not limited in the embodiments of the present disclosure.

Referring to FIG. 3, FIG. 3 is a flowchart of a multi-PRACH transmission method according to an embodiment of the disclosure. The method may be performed by the terminal shown in FIG. 1.

The multi-PRACH transmission method can be executed alone, or can be executed in combination with any embodiment or possible implementation in the embodiment, or can be executed in combination with any technical solution in the related art.

As illustrated in FIG. 3, the method may include, but not limited to, the following steps.

At step 301, a triggering condition for a multi-PRACH transmission is determined.

The triggering condition may include that a BWP initiating a random access is configured with a first PRACH resource.

At step 302, the multi-PRACH transmission is triggered in response to reaching the triggering condition, in which the first PRACH resource is configured for the multi-PRACH transmission, and the triggering condition is that the BWP initiating the random access is configured with the first PRACH resource.

In the embodiments of the present disclosure, in an example, in response to the BWP being configured with the first PRACH resource only, the multi-PRACH transmission is triggered. In other words, the BWP is not configured with PRACH resources that are not available for the multi-PRACH transmission. In other words, all PRACH resources configured for the BWP can be configured for the multi-PRACH transmission.

The first PRACH resource refers to a first type of PARCH resources, without limitation on the number of PARCH resources.

In another example, in response to the first PRACH resource including a second PRACH resource only and the terminal having a CE characteristic, the multiple PRACH transmission is triggered. The second PRACH resource is a PRACH resource available to the terminal having the CE characteristic. That is, the first PRACH resource does not include PRACH resources that are not available to the terminal having the CE characteristic. In other words, all PRACH resources configured for the BWP can be configured for the multi-PRACH transmission.

The second PRACH resource refers to a second type of PRACH resources, without limitation on the number of PRACH resources.

There are multiple Msg1s or MsgAs for the random access, and different Msg1s or MsgAs are sent at different time-frequency resource positions.

With the multi-PRACH transmission method provided in the embodiment of the present disclosure, the terminal determines the triggering condition for the multi-PRACH transmission, and triggers the multi-PRACH transmission in response to reaching the triggering condition. The first PRACH resource is configured for the multi-PRACH transmission, and the triggering condition is that the BWP initiating the random access is configured with the first PRACH resource. In this way, in a case that the triggering condition for the multi-PRACH transmission is reached, multiple PRACH transmissions can be performed when multiple random access messages are sent, to improve resource utilization and transmission efficiency.

**It** should be noted that the above possible implementations can be executed individually or in combination, which is not limited in the embodiments of the present disclosure.

Referring to FIG. 4, FIG. 4 is a flowchart of a multi-PRACH transmission method according to another embodiment of the disclosure. The method may be performed by the terminal shown in FIG. 1.

The multi-PRACH transmission method can be executed alone, or can be executed in combination with any embodiment or possible implementation in the embodiment, or can be executed in combination with any technical solution in the related art.

As illustrated in FIG. 4, the method may include, but not limited to, the following steps.

At step 401, a triggering condition for a multi-PRACH transmission is determined.

The triggering condition may include that the multi-PRACH transmission is in an enabled state.

In this embodiment of the present disclosure, step 401 can be implemented in any manner among various embodiments of the present disclosure, which is not limited in the embodiment of the present disclosure and will not be described again.

At step 402, it is determined whether the multi-PRACH transmission is in the enabled state.

In the embodiments of the present disclosure, in an example, it may be determined that the multi-PRACH transmission is in the enabled state according to the received first indication information received from a network device. The first indication information is used to indicate that the terminal is allowed to perform the multi-PRACH transmission. In an implementation, the first indication information may have two states to indicate enabling of the multi-PRACH transmission or disabling of the multi-PRACH transmission. In another implementation, the state that the multi-PRACH transmission is disabled is set by default, it is determined to enable the multi-PRACH transmission only when the first indication information is received. In another implementation, the state that the multi-PRACH transmission is enabled is set by default, it is determined to disable the multi-PRACH transmission only when the first indication information is received.

The first indication message may be a system message or a radio resource control (RRC) message.

In another example, in response to the terminal being configured with a first PRACH resource or the terminal being configured with a first transmission mode, it is determined that the multi-PRACH transmission is in the enabled state. The first PRACH resource is configured for the multi-PRACH transmission. The first transmission mode is configured for the multi-PRACH transmission.

The first PRACH resource refers to a first type of PARCH resources, without limitation on the number of PARCH resources. The first transmission mode refers to a first type of transmission modes, without limitation on the number of transmission modes.

The first transmission mode includes at least one of the following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

At step 403, the multi-PRACH transmission is triggered in response to reaching the triggering condition, in which the triggering condition is that the multi-PRACH transmission is in the enabled state.

With the multi-PRACH transmission method provided in the embodiment of the present disclosure, the terminal determines the triggering condition for the multi-PRACH transmission, determines whether the multi-PRACH transmission is in the enabled state, and triggers the multi-PRACH transmission in response to reaching the triggering condition. The triggering condition is that the multi-PRACH transmission is in the enabled state. In this way, in a case that the triggering condition for the multi-PRACH transmission is reached, multiple PRACH transmissions can be performed when multiple random access messages are sent, to improve resource utilization and transmission efficiency.

It should be noted that the above possible implementations can be executed individually or in combination, which is not limited in the embodiments of the present disclosure.

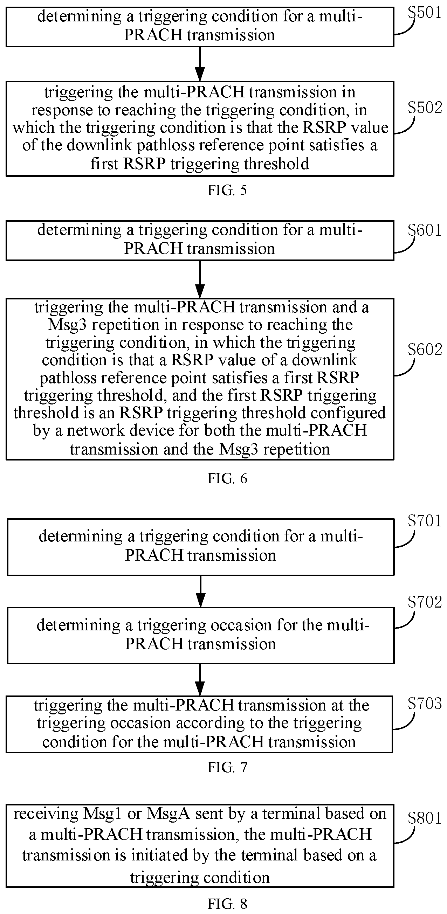

Referring to FIG. 5, FIG. 5 is a flowchart of a multi-PRACH transmission method according to another embodiment of the disclosure. The method may be performed by the terminal shown in FIG. 1.

The multi-PRACH transmission method can be executed alone, or can be executed in combination with any embodiment or possible implementation in the embodiment, or can be executed in combination with any technical solution in the related art.

As illustrated in FIG. 5, the method may include, but not limited to, the following steps.

At step 501, a triggering condition for a multi-PRACH transmission is determined.

The triggering condition may include that a RSRP value of a downlink pathloss reference point satisfies an RSRP triggering threshold.

In this embodiment of the present disclosure, step 501 can be implemented in any manner among various embodiments of the present disclosure, which is not limited in the embodiment of the present disclosure and will not be described again.

At step 502, the multi-PRACH transmission is triggered in response to reaching the triggering condition, in which the triggering condition is that the RSRP value of the downlink pathloss reference point satisfies a first RSRP triggering threshold.

In the embodiments of the present disclosure, in an example, the first RSRP triggering threshold is an RSRP triggering threshold configured by a network device for the multi-PRACH transmission. In detail, the first RSRP triggering threshold may be an RSRP triggering threshold configured by the network device for the multi-PRACH transmission only. Or the first RSRP triggering threshold may be an RSRP triggering threshold configured by the network device for both the multi-PRACH transmission and a Msg3 repetition. The RSRP value of the downlink pathloss reference point is less than the first RSRP triggering threshold. The first RSRP triggering threshold refers to a first type of RSRP triggering thresholds, without limitation on the number of RSRP triggering thresholds.

In another example, the first RSRP triggering threshold may be an RSRP triggering threshold configured by the network device for the Msg3 repetition of the terminal having a CE characteristic. That is, the RSRP triggering threshold configured by the network device for the Msg3 repetition of the terminal having the CE characteristic is reused.

In the embodiments of the present disclosure, the first RSRP triggering threshold may be the RSRP triggering threshold configured by the network device for both the multi-PRACH transmission and the Msg3 repetition. That is, the triggering threshold for the Msg3 repetition is the same as the RSRP triggering threshold for the multi-PRACH transmission. In other words, the RSRP triggering threshold for the multi-PRACH transmission may also be used as the triggering threshold for the Msg3 repetition.

In the embodiments of the present disclosure, there are a plurality of first RSRP triggering thresholds, and there are a plurality of BWPs. Each BWP is configured with a plurality of first PRACH resources, and the first PRACH resource is configured for the multi-PRACH transmission. The plurality of first RSRP triggering thresholds have a one-to-one correspondence with the plurality of BWPs, or the plurality of first RSRP triggering thresholds have a one-to-one correspondence with the plurality of first PRACH resources.

The first RSRP triggering threshold is carried in a system message or in a first radio resource control (RRC) message. The first RRC message includes at least one of following RRC messages: an RRCReconfiguration (RRC reconfiguration) message, an RRCResume (RRC resume) message, an RRCRelease (RRC release) message or an RRCSetup (RRC setup) message. The system message may be a SIB1 (Scheduling Unit-1, scheduling block), carrying some cell selection information.

In the embodiments of the present disclosure, the first RSRP triggering threshold may be carried in any of the following resource configurations: a common PRACH resource configuration, a PRACH resource configuration corresponding to a characteristic combination or a dedicated PRACH resource configuration. The characteristic combination includes a CE characteristic.

In an example, a type of the random access is a contention-based random access type. The common PRACH resource configuration includes a common PRACH resource configuration of at least one BWP. The dedicated PRACH resource configuration includes at least one of the following configurations: a beam failure recovery (BFR) configuration, or a RACH-ConfigDedicated configuration.

The BWP may be a BWP of a cell where the terminal resides when the terminal enters an RRC connected state from an RRC idle state, such as an initial BWP or other BWPs. For example, the first RSRP triggering threshold may be carried in RACH-ConfigCommon in an initial BWP configuration of SIB1, or the first RSRP triggering threshold may be carried in a dedicated signaling, such as RACH-ConfigCommon in a BWP configuration of the RRCReconfiguration message.

The first RSRP triggering threshold may be carried in the PRACH resource configuration corresponding to the characteristic combination. The characteristic combination includes the CE characteristic. The CE characteristic supporting the multi-PRACH transmission is defined as a new characteristic, and the CE characteristic the newly introduced coverage enhancement characteristic supporting the multi-PRACH transmission.

In another example, a type of the random access is a contention free random access (CFRA) type, and the first RSRP triggering threshold is carried in the dedicated PRACH resource configuration. The dedicated PRACH resource configuration includes at least one of following configurations: a CFRA resource configuration for BFR, a CFRA resource configuration for handover or a CFRA resource configuration for primary secondary cell (PSCell) addition or change.

For the CFRA resource configuration for handover and the CFRA resource configuration for PSCell addition or change, the first RSRP triggering threshold may be carried in the CFRA resource configuration in the RACH-COnfigDedicated. For the CFRA resource configuration for BFR, the first RSRP triggering threshold may be carried in the beam failure recovery configuration (BeamFailureRecoveryConfig).

With the multi-PRACH transmission method provided in the embodiment of the present disclosure, the terminal determines the triggering condition for the multi-PRACH transmission, and triggers the multi-PRACH transmission in response to reaching the triggering condition. The triggering condition is that the RSRP value of the downlink pathloss reference point satisfies the first RSRP triggering threshold. In this way, in a case that the triggering condition for the multi-PRACH transmission is reached, multiple PRACH transmissions can be performed when multiple random access messages are sent, to improve resource utilization and transmission efficiency.

Referring to FIG. 6, FIG. 6 is a flowchart of a multi-PRACH transmission method according to another embodiment of the disclosure. The method may be performed by the terminal shown in FIG. 1.

The multi-PRACH transmission method can be executed alone, or can be executed in combination with any embodiment or possible implementation in the embodiment, or can be executed in combination with any technical solution in the related art.

As illustrated in FIG. 6, the method may include, but not limited to, the following steps.

At step 501, a triggering condition for a multi-PRACH transmission is determined.

The multi-PRACH transmission refers to two or more PRACH transmissions. In an implementation, the multi-PRACH transmission may be two or more PRACH transmissions in parallel. The triggering condition for the multi-PRACH transmission refers to a condition for triggering the multi-PRACH transmission.

In this embodiment of the present disclosure, step 601 can be implemented in any manner among various embodiments of the present disclosure, which is not limited in the embodiment of the present disclosure and will not be described again.

At step 602, the multi-PRACH transmission and a Msg3 repetition are triggered in response to reaching the triggering condition, in which the triggering condition is that a RSRP value of a downlink pathloss reference point satisfies a first RSRP triggering threshold, and the first RSRP triggering threshold is an RSRP triggering threshold configured by a network device for both the multi-PRACH transmission and the Msg3 repetition.

In the embodiments of the present disclosure, in a case that the triggering condition is met, i.e., the RSRP value of the downlink pathloss reference point satisfies the first RSRP triggering threshold, when the RSRP value of the downlink pathloss reference point is less than the first RSRP triggering threshold, and the first RSRP triggering threshold is the RSRP triggering threshold configured by the network device for both the multi-PRACH transmission and the Msg3 repetition (Msg3 retransmission), the multi-PRACH transmission and the Msg3 repetition are triggered.

With the multi-PRACH transmission method provided in the embodiment of the present disclosure, the terminal determines the triggering condition for the multi-PRACH transmission, and triggers the multi-PRACH transmission and the Msg3 repetition in response to reaching the triggering condition. The triggering condition is that the RSRP value of the downlink pathloss reference point satisfies the first RSRP triggering threshold, and the first RSRP triggering threshold is the RSRP triggering threshold configured by the network device for both the multi-PRACH transmission and the Msg3 repetition. In this way, in a case that the triggering condition for the multi-PRACH transmission is reached, multiple PRACH transmissions can be performed when multiple random access messages are sent, to improve resource utilization and transmission efficiency.

Referring to FIG. 7, FIG. 7 is a flowchart of a multi-PRACH transmission method according to another embodiment of the disclosure. The method may be performed by the terminal shown in FIG. 1.

The multi-PRACH transmission method can be executed alone, or can be executed in combination with any embodiment or possible implementation in the embodiment, or can be executed in combination with any technical solution in the related art.

As illustrated in FIG. 7, the method may include, but not limited to, the following steps.

At step 701, a triggering condition for a multi-PRACH transmission is determined.

The multi-PRACH transmission is used to indicate that the terminal performs multiple PRACH transmissions when sending Msg1 or MsgA for a random access.

In this embodiment of the present disclosure, step 701 can be implemented in any manner among various embodiments of the present disclosure, which is not limited in the embodiment of the present disclosure and will not be described again.

At step 702, a triggering occasion for the multi-PRACH transmission is determined.

The triggering occasion is any one of the following occasions: an occasion after a carrier selection in a random access procedure, an occasion after a BWP selection in a random access procedure, or an occasion after an SSB selection in a random access procedure.

The occasion after the BWP selection in the random access procedure includes any one of the following occasions: an occasion before a random access (RA) type selection in the random access procedure, or an occasion after an RA type selection in the random access procedure.

In the embodiments of the present disclosure, in an example, the terminal may determine, according to the triggering condition for the multi-PRACH transmission, whether to trigger the multi-PRACH transmission after the carrier selection in the random access procedure.

In another example, the terminal may determine, according to the triggering condition for the multi-PRACH transmission, whether to trigger the multi-PRACH transmission after the BWP selection in the random access procedure.

In another example, the terminal may determine, according to the triggering condition for the multi-PRACH transmission, whether to trigger the multi-PRACH transmission after the SSB selection in the random access procedure.

At step 703, the multi-PRACH transmission is triggered at the triggering occasion according to the triggering condition for the multi-PRACH transmission.

In the embodiments of the present disclosure, in an example, if the triggering occasion is after the BWP selection in the random access procedure, the terminal may perform the following process: at the triggering occasion, triggering a Msg3 repetition according to a triggering condition for the Msg3 repetition in response to the triggering condition for the multi-PRACH transmission being used only for the multi-PRACH transmission, or triggering a Msg3 repetition while triggering the multi-PRACH transmission in response to the triggering condition for the multi-PRACH transmission being used for an RSRP triggering threshold for both the multi-PRACH transmission and the Msg3 repetition.

In another example, if the triggering occasion is after the BWP selection in the random access procedure, the terminal may perform the following process: triggering a Msg3 repetition at the triggering occasion according to a triggering condition for the Msg3 repetition before triggering the multi-PRACH transmission according to the triggering condition for the multi-PRACH transmission, in response to the triggering condition for the multi-PRACH transmission being used only for the multi-PRACH transmission; or triggering a Msg3 repetition while triggering the multi-PRACH transmission, in response to the triggering condition for the multi-PRACH transmission being used for an RSRP triggering threshold for both the multi-PRACH transmission and the Msg3 repetition.

With the multi-PRACH transmission method provided in the embodiment of the present disclosure, the terminal determines the triggering condition for the multi-PRACH transmission, in which the multi-PRACH transmission is used to indicate that the terminal performs the multiple PRACH transmissions when sending the Msg1 or MsgA for the random access. The terminal determines the triggering occasion for the multi-PRACH transmission, and triggers the multi-PRACH transmission at the triggering occasion according to the triggering condition for the multi-PRACH transmission. In this way, in a case that the triggering condition for the multi-PRACH transmission is reached, multiple PRACH transmissions can be performed when multiple random access messages are sent, to improve resource utilization and transmission efficiency.

It should be noted that the above possible implementations can be executed individually or in combination, which is not limited in the embodiments of the present disclosure.

Referring to FIG. 8, FIG. 8 is a flowchart of a multi-PRACH transmission method according to another embodiment of the disclosure. The method may be performed by the network device shown in FIG. 1.

The multi-PRACH transmission method can be executed alone, or can be executed in combination with any embodiment or possible implementation in the embodiment, or can be executed in combination with any technical solution in the related art.

As illustrated in FIG. 8, the method may include, but not limited to, the following steps.

At step 801, Msg1 or MsgA sent by a terminal based on a multi-PRACH transmission is received. The multi-PRACH transmission is initiated by the terminal based on a triggering condition.

In the embodiments of the present disclosure, the multi-PRACH transmission refers to two or more PRACH transmissions. In an implementation, the multi-PRACH transmission may be two or more PRACH transmissions in parallel.

In the embodiments of the present disclosure, the triggering condition for the multi-PRACH transmission refers to a condition for triggering the multi-PRACH transmission. It should be noted that the triggering condition for the multi-PRACH transmission is a necessary condition, that is, the multi-PRACH transmission is triggered only when the triggering condition for the multi-PRACH transmission in the embodiments of the present disclosure is satisfied. In an implementation, the triggering condition for the multi-PRACH transmission can be considered as a sufficient condition, that is, as long as the triggering condition for the multi-PRACH transmission in the embodiments of the present disclosure is satisfied, the multi-PRACH transmission is triggered. In another implementation, the triggering condition for the multi-PRACH transmission can be considered as a non-sufficient condition, that is, in addition to satisfying the triggering condition for the multi-PRACH transmission in the embodiments of the present disclosure, other conditions need to be satisfied to trigger the multi-PRACH transmission. The other conditions may be conditions determined based on a communication protocol or a configuration of a base station or any other means. The above implementations can be applied in all embodiments of the present disclosure, which will not be described again.

In the embodiments of the present disclosure, the triggering condition may include at least one of the following conditions: a BWP initiating a random access being configured with a first PRACH resource, the multi-PRACH transmission being in an enabled state, or a reference signal receiving power (RSRP) value of a downlink pathloss reference point satisfying a first RSRP triggering threshold.

In an example, the triggering condition may include any one of the above conditions. For example, the triggering condition is that the BWP initiating a random access is configured with the first PRACH resource; or the triggering condition is that the multi-PRACH transmission is in the enabled state; or the triggering condition is that the RSRP value of the downlink pathloss reference point satisfies the first RSRP triggering threshold.

The first PRACH resource refers to a first type of PARCH resources, without limitation on the number of PARCH resources.

In another example, the triggering condition may include any two of the above conditions. For example, the triggering condition may include that the BWP initiating a random access is configured with the first PRACH resource and the multi-PRACH transmission is in the enabled state. For another example, the triggering condition may include that the BWP initiating a random access is configured with the first PRACH resource and the RSRP value of the downlink pathloss reference point satisfies the first RSRP triggering threshold. For another example, the triggering condition may include that the multi-PRACH transmission is in the enabled state and the RSRP value of the downlink pathloss reference point satisfies the first RSRP triggering threshold.

In another example, the triggering condition may include three of the above conditions. For example, the triggering condition may include that the BWP initiating a random access is configured with the first PRACH resource, the multi-PRACH transmission is in the enabled state, and the RSRP value of the downlink pathloss reference point satisfies the first RSRP triggering threshold. The first RSRP triggering threshold refers to a first type of RSRP triggering thresholds, without limitation on the number of RSRP triggering thresholds.

With the multi-PRACH transmission method provided in the embodiment of the present disclosure, the network device receives the Msg1 or MsgA sent by the terminal based on the multi-PRACH transmission, in which the multi-PRACH transmission is initiated by the terminal based on the triggering condition, so that the terminal can trigger PRACH transmissions, to improve resource utilization and transmission efficiency.

It should be noted that the above possible implementations can be executed individually or in combination, which is not limited in the embodiments of the present disclosure.

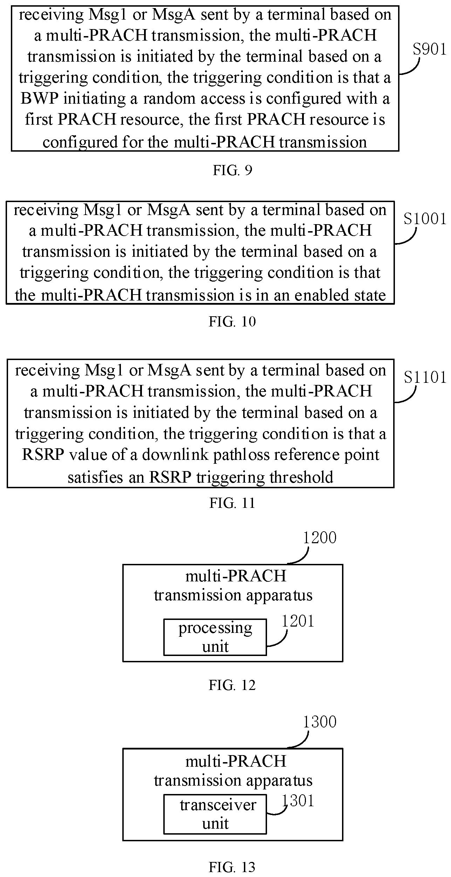

Referring to FIG. 9, FIG. 9 is a flowchart of a multi-PRACH transmission method according to another embodiment of the disclosure. The method may be performed by the network device shown in FIG. 1.

The multi-PRACH transmission method can be executed alone, or can be executed in combination with any embodiment or possible implementation in the embodiment, or can be executed in combination with any technical solution in the related art.

As illustrated in FIG. 9, the method may include, but not limited to, the following steps.

At step 901, Msg1 or MsgA sent by a terminal based on a multi-PRACH transmission is received. The multi-PRACH transmission is initiated by the terminal based on a triggering condition. The triggering condition is that a BWP initiating a random access is configured with a first PRACH resource. The first PRACH resource is configured for the multi-PRACH transmission.

The triggering condition is that the BWP initiating a random access is configured with the first PRACH resource only. Or the triggering condition is that the first PRACH resource includes a second PRACH resource only and the terminal has a CE characteristic, in which the second PRACH resource is a PRACH resource available to the terminal having the CE characteristic.

There are multiple Msg1s or MsgAs for the random access, and different Msg1s or MsgAs are sent at different time-frequency resource positions.

The first PRACH resource refers to a first type of PRACH resources, without limitation on the number of PRACH resources. The second PRACH resource refers to a second type of PRACH resources, without limitation on the number of PRACH resources.

With the multi-PRACH transmission method provided in the embodiment of the present disclosure, the network device receives the Msg1 or MsgA sent by the terminal based on the multi-PRACH transmission, in which the multi-PRACH transmission is initiated by the terminal based on the triggering condition, so that the terminal can trigger PRACH transmissions in response to reaching the triggering condition, to improve resource utilization and transmission efficiency.

It should be noted that the above possible implementations can be executed individually or in combination, which is not limited in the embodiments of the present disclosure.

Referring to FIG. 10, FIG. 10 is a flowchart of a multi-PRACH transmission method according to another embodiment of the disclosure. The method may be performed by the network device shown in FIG. 1.

The multi-PRACH transmission method can be executed alone, or can be executed in combination with any embodiment or possible implementation in the embodiment, or can be executed in combination with any technical solution in the related art.

As illustrated in FIG. 10, the method may include, but not limited to, the following steps.

At step 1001, Msg1 or MsgA sent by a terminal based on a multi-PRACH transmission is received. The multi-PRACH transmission is initiated by the terminal based on a triggering condition. The triggering condition is that the multi-PRACH transmission is in an enabled state.

In the embodiments of the present disclosure, in an example, the network device may send first indication information to the terminal, in which the first indication information is used to indicate that the terminal is allowed to perform the multi-PRACH transmission. The first indication message may be a system message or a radio resource control (RRC) message.

In an implementation, the first indication information may have two states to indicate enabling of the multi-PRACH transmission or disabling of the multi-PRACH transmission. In another implementation, the state that the multi-PRACH transmission is disabled is set by default, it is determined to enable the multi-PRACH transmission only when the first indication information is received. In another implementation, the state that the multi-PRACH transmission is enabled is set by default, it is determined to disable the multi-PRACH transmission only when the first indication information is received.

In the embodiments of the present disclosure, in another example, the network device may configure, for the terminal, a first PRACH resource or a first transmission mode. The first PRACH resource is configured for the multi-PRACH transmission. The first transmission mode is configured for the multi-PRACH transmission. The first PRACH resource refers to a first type of PARCH resources, without limitation on the number of PARCH resources.

The first transmission mode includes at least one of the following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

With the multi-PRACH transmission method provided in the embodiment of the present disclosure, the network device receives the Msg1 or MsgA sent by the terminal based on the multi-PRACH transmission, in which the multi-PRACH transmission is initiated by the terminal based on the triggering condition and the triggering condition is that the multi-PRACH transmission is in the enabled state, so that the terminal can trigger PRACH transmissions in response to reaching the triggering condition, to improve resource utilization and transmission efficiency.

It should be noted that the above possible implementations can be executed individually or in combination, which is not limited in the embodiments of the present disclosure.

Referring to FIG. 11, FIG. 11 is a flowchart of a multi-PRACH transmission method according to another embodiment of the disclosure. The method may be performed by the network device shown in FIG. 1.

The multi-PRACH transmission method can be executed alone, or can be executed in combination with any embodiment or possible implementation in the embodiment, or can be executed in combination with any technical solution in the related art.

As illustrated in FIG. 11, the method may include, but not limited to, the following steps.

At step 1101, Msg1 or MsgA sent by a terminal based on a multi-PRACH transmission is received. The multi-PRACH transmission is initiated by the terminal based on a triggering condition. The triggering condition is that a RSRP value of a downlink pathloss reference point satisfies an RSRP triggering threshold.

In the embodiments of the present disclosure, in an example, the network device configures, for the terminal, the first RSRP triggering threshold for the multi-PRACH transmission. The first RSRP triggering threshold refers to a first type of RSRP triggering thresholds, without limitation on the number of RSRP triggering thresholds.

In another example, the network device configures, for the terminal having the CE characteristic, the first RSRP triggering threshold for a Msg3 repetition.

In the embodiments of the present disclosure, the network device may configure, for the terminal, the first RSRP triggering threshold for the multi-PRACH transmission as follows. The network device configures, for the terminal, the first RSRP triggering threshold for the multi-PRACH transmission only, or the network device configures, for the terminal, the first RSRP triggering threshold for both the multi-PRACH transmission and the Msg3 repetition.

There are a plurality of first RSRP triggering thresholds, and there are a plurality of BWPs. Each BWP is configured with a plurality of first PRACH resources, and the first PRACH resource is configured for the multi-PRACH transmission. The plurality of first RSRP triggering thresholds have a one-to-one correspondence with the plurality of BWPs, or the plurality of first RSRP triggering thresholds have a one-to-one correspondence with the plurality of first PRACH resources.

In the embodiments of the present disclosure, the network device may configure, for the terminal, the first RSRP triggering threshold for the multi-PRACH transmission as follows. A system message is sent to the terminal, in which the system message carries the first RSRP triggering threshold. Or a first RRC message is sent to the terminal, in which the first RRC message carries the first RSRP triggering threshold. The first RRC message includes at least one of following RRC messages: an RRCReconfiguration (RRC reconfiguration) message, an RRCResume (RRC resume) message, an RRCRelease (RRC release) message or an RRCSetup (RRC setup) message. The system message may be a SIB1 (Scheduling Unit-1, scheduling block), carrying some cell selection information.

In the embodiments of the present disclosure, the network device may configure, for the terminal, the first RSRP triggering threshold for the multi-PRACH transmission as follows. A common PRACH resource configuration is sent to the terminal, in which the common PRACH resource configuration carries the first RSRP triggering threshold. Or a PRACH resource configuration corresponding to a characteristic combination is sent to the terminal, in which the PRACH resource configuration corresponding to the characteristic combination carries the first RSRP triggering threshold. The characteristic combination includes a CE characteristic. Or a dedicated PRACH resource configuration is sent to the terminal, in which the dedicated PRACH resource configuration carries the first RSRP triggering threshold.

In the embodiments of the present disclosure, in an example, a type of the random access is a contention-based random access type. The common PRACH resource configuration includes a common PRACH resource configuration of at least one BWP. The dedicated PRACH resource configuration includes at least one of the following configurations: a beam failure recovery (BFR) configuration, or a RACH-ConfigDedicated configuration.

The BWP may be a BWP of a cell where the terminal resides when the terminal enters an RRC connected state from an RRC idle state, such as an initial BWP or other BWPs. For example, the first RSRP triggering threshold may be carried in RACH-ConfigCommon in an initial BWP configuration of SIB1, or the first RSRP triggering threshold may be carried in a dedicated signaling, such as RACH-ConfigCommon in a BWP configuration of the RRCReconfiguration message.

The first RSRP triggering threshold may be carried in the PRACH resource configuration corresponding to the characteristic combination. The characteristic combination includes the CE characteristic. The CE characteristic supporting the multi-PRACH transmission is defined as a new characteristic, and the CE characteristic the newly introduced coverage enhancement characteristic supporting the multi-PRACH transmission.

In another example, a type of the random access is a contention free random access (CFRA) type, and the first RSRP triggering threshold is carried in the dedicated PRACH resource configuration. The dedicated PRACH resource configuration includes at least one of following configurations: a CFRA resource configuration for BFR, a CFRA resource configuration for handover or a CFRA resource configuration for primary secondary cell (PSCell) addition or change.

For the CFRA resource configuration for handover and the CFRA resource configuration for PSCell addition or change, the first RSRP triggering threshold may be carried in the CFRA resource configuration in the RACH-COnfigDedicated. For the CFRA resource configuration for BFR, the first RSRP triggering threshold may be carried in the beam failure recovery configuration (BeamFailureRecoveryConfig).

With the multi-PRACH transmission method provided in the embodiment of the present disclosure, the network device receives the Msg1 or MsgA sent by the terminal based on the multi-PRACH transmission, in which the multi-PRACH transmission is initiated by the terminal based on the triggering condition and the triggering condition is that the RSRP value of the downlink pathloss reference point satisfies the first RSRP triggering threshold, so that the terminal can trigger PRACH transmissions in response to reaching the triggering condition.

It should be noted that the above possible implementations can be executed individually or in combination, which is not limited in the embodiments of the present disclosure.

In the above embodiments of the present disclosure, the methods provided by the embodiments of the present disclosure are introduced from the perspectives of the network device and the terminal respectively. In order to implement the various functions in the methods provided by the embodiments of the present disclosure, the network device and the terminal each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

FIG. 12 is a block diagram of a multi-PRACH transmission apparatus 1200 according to an embodiment of the disclosure. The apparatus is applicable to a terminal, and the apparatus includes a processing unit 1201. The processing unit 1201 is configured to: determine a triggering condition for a multi-PRACH transmission, and trigger the multi-PRACH transmission according to the triggering condition for the multi-PRACH transmission, in which the multi-PRACH transmission is used to indicate that the terminal performs multiple PRACH transmissions when sending Msg1 or MsgA for a random access.

In an implementation, the processing unit 1201 is further configured to: trigger the multi-PRACH transmission in response to reaching the triggering condition, in which a first PRACH resource is configured for the multi-PRACH transmission, and the triggering condition is that a bandwidth part (BWP) initiating the random access is configured with the first PRACH resource.

In an implementation, the processing unit 1201 is further configured to: trigger the multi-PRACH transmission in response to the BWP being configured with the first PRACH resource only.

In an implementation, the processing unit 1201 is further configured to: trigger the multi-PRACH transmission in response to the first PRACH resource comprising only a second PRACH resource and the terminal having a coverage enhancement (CE) characteristic; in which the second PRACH resource is a PRACH resource available to a terminal having the CE characteristic.

In an implementation, the processing unit 1201 is further configured to: determine whether the multi-PRACH transmission is in an enabled state; and trigger the multi-PRACH transmission in response to reaching the triggering condition, in which the triggering condition is that the multi-PRACH transmission is in the enabled state.

In an implementation, the processing unit 1201 is further configured to: determine that the multi-PRACH transmission is in the enabled state in response to receiving first indication information from a network device; in which the first indication information is used to indicate that the terminal is allowed to perform the multiple PRACH transmission.

In an implementation, the processing unit 1201 is further configured to: determine that the multi-PRACH transmission is in the enabled state in response to the terminal being configured with a first PRACH resource or the terminal being configured with a first transmission mode; in which the first PRACH resource is configured for the multi-PRACH transmission; the first transmission mode is configured for the multi-PRACH transmission.

In an implementation, the first transmission mode includes at least one of following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

In an implementation, the processing unit 1201 is further configured to: trigger the multi-PRACH transmission in response to reaching the triggering condition, in which the triggering condition is that a reference signal receiving power (RSRP) value of a downlink pathloss reference point satisfies a first RSRP triggering threshold.

In an implementation, the first RSRP triggering threshold is an RSRP triggering threshold configured by a network device for the multi-PRACH transmission.

In an implementation, the first RSRP triggering threshold is an RSRP triggering threshold configured by the network device only for the multi-PRACH transmission; or the first RSRP triggering threshold is an RSRP triggering threshold configured by the network device for both the multi-PRACH transmission and a Msg3 repetition.

In an implementation, the first RSRP triggering threshold is an RSRP triggering threshold configured by the network device for a Msg3 repetition of the terminal having a CE characteristic.

In an implementation, there are a plurality of first RSRP triggering thresholds, and there are a plurality of BWPs, wherein each BWP is configured with a plurality of first PRACH resources, the first PRACH resource is configured for the multi-PRACH transmission; wherein the plurality of first RSRP triggering thresholds have a one-to-one correspondence with the plurality of BWPs, or the plurality of first RSRP triggering thresholds have a one-to-one correspondence with the plurality of first PRACH resources.

In an implementation, the first RSRP triggering threshold is carried in a system message or in a first radio resource control (RRC) message; in which the first RRC message includes at least one of following RRC messages: an RRCReconfiguration message, an RRCResume message, an RRCRelease message or an RRCSetup message.

In an implementation, the first RSRP triggering threshold is carried in at least one of following resource configurations: a common PRACH resource configuration, a PRACH resource configuration corresponding to a characteristic combination or a dedicated PRACH resource configuration; in which the characteristic combination comprises a CE characteristic.

In an implementation, a type of the random access is a contention-based random access type; in which the common PRACH resource configuration includes a common PRACH resource configuration of at least one BWP; the dedicated PRACH resource configuration includes at least one of following configurations: a beam failure recovery (BFR) configuration, or a RACH-ConfigDedicated configuration.

In an implementation, a type of the random access is a contention free random access (CFRA) type, and the first RSRP triggering threshold is carried in the dedicated PRACH resource configuration; in which the dedicated PRACH resource configuration includes at least one of following configurations: a CFRA resource configuration for BFR, a CFRA resource configuration for handover or a CFRA resource configuration for primary secondary cell (PSCell) addition or change.

In an implementation, the processing unit 1201 is further configured to: trigger the multi-PRACH transmission and a Msg3 repetition in response to reaching the triggering condition, in which the triggering condition is that an RSRP value of a downlink pathloss reference point satisfies a first RSRP triggering threshold, and the first RSRP triggering threshold is an RSRP triggering threshold configured by a network device for both the multi-PRACH transmission and the Msg3 repetition.

In an implementation, the processing unit 1201 is further configured to: determine a triggering occasion of the multi-PRACH transmission; and trigger the multi-PRACH transmission according to the triggering condition for the multi-PRACH transmission at the triggering occasion.

In an implementation, the triggering occasion is any one of following occasions: an occasion after a carrier selection in a random access procedure, an occasion after a BWP selection in a random access procedure, or an occasion after an SSB selection in a random access procedure.

In an implementation, the occasion after the BWP selection in the random access procedure includes any one of following occasions: an occasion before a random access (RA) type selection in the random access procedure, or an occasion after an RA type selection in the random access procedure.

In an implementation, the triggering occasion is the occasion after the BWP selection in the random access procedure, the processing unit 1201 is further configured to: trigger a Msg3 repetition according to a triggering condition for the Msg3 repetition in response to the triggering condition for the multi-PRACH transmission being used only for the multi-PRACH transmission; or trigger a Msg3 repetition while triggering the multi-PRACH transmission, in response to the triggering condition for the multi-PRACH transmission being used for an RSRP triggering threshold for both the multi-PRACH transmission and the Msg3 repetition.

In an implementation, the triggering occasion is the occasion after the BWP selection in the random access procedure, the processing unit 1201 is further configured to: trigger a Msg3 repetition according to a triggering condition for the Msg3 repetition at the triggering occasion before triggering the multi-PRACH transmission according to the triggering condition for the multi-PRACH transmission, in response to the triggering condition for the multi-PRACH transmission being used only for the multi-PRACH transmission; or trigger a Msg3 repetition while triggering the multi-PRACH transmission, in response to the triggering condition for the multi-PRACH transmission being used for an RSRP triggering threshold for both the multi-PRACH transmission and the Msg3 repetition.

With the multi-PRACH transmission apparatus provided in the embodiment of the present disclosure, the terminal determines the triggering condition for the multi-PRACH transmission, and triggers the multi-PRACH transmission according to the triggering condition for the multi-PRACH transmission. The multi-PRACH transmission is used to indicate that the terminal performs multiple PRACH transmissions when sending Msg1 or MsgA for the random access. In this way, in a case that the triggering condition for the multi-PRACH transmission is reached, the multiple PRACH transmissions can be performed when multiple random access messages are sent, to improve resource utilization and transmission efficiency.

It should be noted that the above possible implementations can be executed individually or in combination, which is not limited in the embodiments of the present disclosure.

FIG. 13 is a block diagram of a multi-PRACH transmission apparatus 1300 according to another embodiment of the disclosure. The apparatus is applicable to a terminal, and the apparatus includes a transceiver unit 1301. The transceiver unit 1301 is configured to: receive Msg1 or MsgA sent by a terminal based on a multi-PRACH transmission, in which the multi-PRACH transmission is initiated by the terminal based on a triggering condition.

In an implementation, the triggering condition is that a bandwidth part (BWP) initiating a random access is configured with a first PRACH resource; the first PRACH resource is configured for the multi-PRACH transmission.

In an implementation, the triggering condition is that the BWP initiating the random access is configured with the first PRACH resource only; or the triggering condition is that the first PRACH resource comprises only a second PRACH resource and the terminal has a coverage enhancement (CE) characteristic; in which the second PRACH resource is a PRACH resource available to a terminal having the CE characteristic.

In an implementation, the triggering condition is that the multi-PRACH transmission is in an enabled state.

In an implementation, the transceiver unit 1301 is further configured to: send first indication information to the terminal, in which the first indication information is used to indicate that the terminal is allowed to perform the multiple PRACH transmission.

In an implementation, the apparatus further includes a processing unit configured to: configure a first PRACH resource for the terminal, or configure a first transmission mode for the terminal; in which the first PRACH resource is configured for the multi-PRACH transmission; the first transmission mode is configured for the multi-PRACH transmission.

In an implementation, the first transmission mode includes at least one of following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

In an implementation, the triggering condition is that a reference signal receiving power (RSRP) value of a downlink pathloss reference point satisfies a first RSRP triggering threshold.

In an implementation, the processing unit is further configured to: configure, for the terminal, the first RSRP triggering threshold for the multi-PRACH transmission.

In an implementation, the processing unit is further configured to: configure, for the terminal, the first RSRP triggering threshold for the multi-PRACH transmission only; or configure, for the terminal, the first RSRP triggering threshold for both the multi-PRACH transmission and a Msg3 repetition.

In an implementation, the processing unit is further configured to: configure, for the terminal having a CE characteristic, the first RSRP triggering threshold for a Msg3 repetition.

In an implementation, there are a plurality of first RSRP triggering thresholds, and there are a plurality of BWPs, in which each BWP is configured with a plurality of first PRACH resources, the first PRACH resource is configured for the multi-PRACH transmission; in which the plurality of first RSRP triggering thresholds have a one-to-one correspondence with the plurality of BWPs, or the plurality of first RSRP triggering thresholds have a one-to-one correspondence with the plurality of first PRACH resources.

In an implementation, the processing unit is further configured to: send a system message to the terminal, in which the system message carries the first RSRP triggering threshold; or send a first radio resource control (RRC) message to the terminal, in which the first RRC message carries the first RSRP triggering threshold; in which the first RRC message includes at least one of following RRC messages: an RRCReconfiguration message, an RRCResume message, an RRCRelease message or an RRCSetup message.

In an implementation, the processing unit is further configured to: send a common PRACH resource configuration to the terminal, in which the common PRACH resource configuration carries the first RSRP triggering threshold; or send a PRACH resource configuration corresponding to a characteristic combination to the terminal, in which the PRACH resource configuration corresponding to the characteristic combination carries the first RSRP triggering threshold, and the characteristic combination comprises a CE characteristic; or send a dedicated PRACH resource configuration to the terminal, in which the dedicated PRACH resource configuration carries the first RSRP triggering threshold.

In an implementation, a type of the random access is a contention-based random access type; in which the common PRACH resource configuration includes a common PRACH resource configuration of at least one BWP; the dedicated PRACH resource configuration includes at least one of following configurations: a beam failure recovery (BFR) configuration, or a RACH-ConfigDedicated configuration.

In an implementation, a type of the random access is a contention free random access (CFRA) type, and the first RSRP triggering threshold is carried in the dedicated PRACH resource configuration; in which the dedicated PRACH resource configuration includes at least one of following configurations: a CFRA resource configuration for BFR, a CFRA resource configuration for handover or a CFRA resource configuration for primary secondary cell (PSCell) addition or change.

With the multi-PRACH transmission apparatus provided in the embodiment of the present disclosure, the network device receives the Msg1 or MsgA sent by the terminal based on the multi-PRACH transmission, in which the multi-PRACH transmission is initiated by the terminal based on the triggering condition, so that the terminal can trigger PRACH transmissions, to improve resource utilization and transmission efficiency.

It should be noted that the above possible implementations can be executed individually or in combination, which is not limited in the embodiments of the present disclosure.

It should be noted that the explanation of the method performed on the terminal side in any of the foregoing embodiments of FIGS. 2 to 7 is also applicable to the multi-PRACH transmission apparatus 1200 of the embodiments, or the explanation of the method performed on the network device side any of the foregoing implementations of FIGS. 8 to 11 is also applies to the multi-PRACH transmission apparatus 1300 of the embodiments. The implementation principles are similar and will not be described again here.

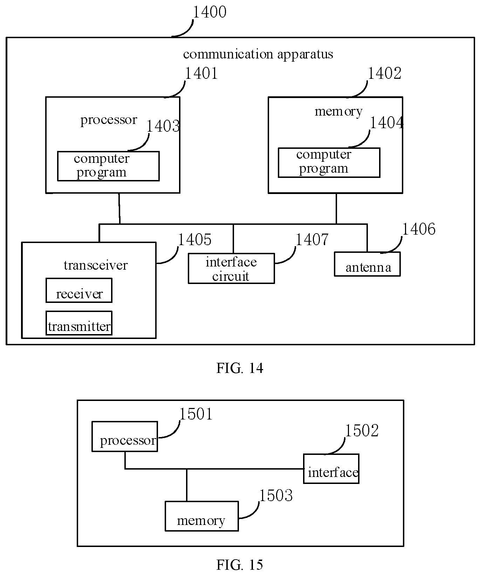

Referring to FIG. 14, FIG. 14 is a block diagram of a communication apparatus 1400 according to an embodiment of the disclosure. The communication apparatus can be a network device, or a terminal, or a chip, a chip system, a processor, etc. that supports the network device to implement the method, or a chip, a chip system, a processor, etc. that supports the terminal to implement the method. The apparatus is configured to implement the method in the above method embodiments. For details, please refer to the descriptions in the above method embodiments.

The communication apparatus 1400 may include one or more processors 1401. The processor 1401 can be a general-purpose processor or a special-purpose processor. For example, it may be a baseband processor or a central processing unit. The baseband processor is configured to process communication protocols and communication data, and the central processor is configured to control the communication apparatus (such as base station, baseband chip, terminal, terminal chip, DU or CU, etc.) to execute computer programs and process computer program data.

Optionally, the communication apparatus 1400 may also include one or more memories 1402 on each of which a computer program 1404 is stored. When the computer program 1404 is executed by the processor 1401, the communication apparatus 1400 is caused to perform the method in the above method embodiments. Optionally, the memory 1402 may also store data. The communication apparatus 1400 and the memory 1402 can be set separately or integrated together.

Optionally, the communication apparatus 1400 may include a transceiver 1405 and an antenna 1406. The transceiver 1405 can be called a transceiving unit, a transceiving machine, or a transceiving circuit, etc., to implement the transceiving function. The transceiver 1405 may include a receiver and a transmitter. The receiver can be called a receiver or a receiving circuit, etc., for realizing the receiving function; and the transmitter can be called a transmitter or a transmitting circuit, etc., to implement the transmitting function.

Optionally, the communication apparatus 1400 may further include one or more interface circuits 1407. The interface circuit 1407 is configured to receive a code instruction and transmit the code instruction to the processor 1401. The code instruction is running on the processor 1401, the communication apparatus 1400 is caused to implement the method in the above embodiments.

When the communication apparatus 1400 is a terminal, the processor 1401 is configured to execute steps 201-202 in FIG. 2, steps 301-302 in FIG. 3, steps 401-403 in FIG. 4, steps 501-502 in FIG. 5, steps 601-602 in FIG. 6, steps 701-703 in FIG. 4.

When the communication apparatus 1400 is a network device, the processor 1401 is configured to execute step 801 in FIG. 8, step 901 in FIG. 9, step 1001 in FIG. 10, step 1101 in FIG. 11.

In an implementation, the processor 1401 may include a transceiver for implementing the receiving and transmitting function. For example, the transceiver can be a transceiving circuit, or an interface, or an interface circuit. The transceiving circuits, interfaces, or interface circuits configured to perform the receiving and transmitting function may be separate or integrated together. The transceiving circuit, interface or interface circuit may be configured to read and write code/data, or the transceiving circuit, interface or interface circuit may be configured to transmit signals.

In an embodiment, the processor 1401 may store a computer program 1403. When the computer program 1403 is running on the processor 1401, the communication apparatus 1400 is caused to perform the method in the above embodiments. The computer program 1403 may be solidified in the processor 1401. In this way, the processor 1401 may be implemented in hardware.

In an embodiment, the communication apparatus 1400 may include a circuit that can implement the transmitting or receiving or communicating function in the above method embodiments. The processors and transceivers in the disclosure can be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver can also be manufactured with various IC process technologies, such as a complementary metal oxide semiconductor (CMOS), nMetal-oxide-semiconductor (NMOS), a positive channel metal oxide semiconductor (PMOS), bipolar junction transistor (BJT), a bipolar CMOS (BiCMOS), silicon germanium (SiGe), gallium arsenide (GaAs), etc.

The communication apparatus in the above embodiments can be a network device or a terminal, but the scope of the communication apparatus in the disclosure is not limited to this, and the structure of the communication apparatus may not be restricted in FIG. 14. The communication apparatus can be an independent device or part of a larger device. For example, the communication apparatus can be:
(1) an independent IC, or a chip, or a chip system or a subsystem;
(2)a collection including one or more IC, optionally, the IC collection may also include storage components for storing data and computer programs;
(3)an ASIC, such as a modem;
(4) modules embedded in other devices;
(5)a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus can be a chip or a chip system, with reference to the structural diagram of the chip in FIG. 15. The chip shown in FIG. 15 includes the processor 1501 and the interface 1502. There may be one or more processors 1501, and there may be a plurality of interfaces 1502.

Optionally, the chip also includes a memory 1503, which is configured to store necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The disclosure also provides a computer-readable storage medium on which instructions are stored. When the instruction is executed by a computer, the function of any of the above method embodiments is implemented.

The disclosure also provides a computer program product. When the computer program product is executed by a computer, the functions of any of the above method embodiments is implemented.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

## Claims

1. A multi-physical random access channel (PRACH) transmission method, performed by a terminal, comprising:
determining a triggering condition for a multi-PRACH transmission; and
triggering the multi-PRACH transmission according to the triggering condition for the multi-PRACH transmission, wherein the multi-PRACH transmission is used to indicate that the terminal performs multiple PRACH transmissions when sending Msg1 or MsgA for a random access.

2. The method according to claim 1, wherein triggering the multi-PRACH transmission according to the triggering condition for the multi-PRACH transmission comprises:
triggering the multi-PRACH transmission in response to reaching the triggering condition, wherein a first PRACH resource is configured for the multi-PRACH transmission, and the triggering condition is that a bandwidth part (BWP) initiating the random access is configured with the first PRACH resource.

3. The method according to claim 2, wherein triggering the multi-PRACH transmission in response to reaching the triggering condition comprises:
triggering the multi-PRACH transmission in response to the BWP being configured with the first PRACH resource only.

4. The method according to claim 2, wherein triggering the multi-PRACH transmission in response to reaching the triggering condition comprises:
triggering the multi-PRACH transmission in response to the first PRACH resource comprising only a second PRACH resource and the terminal having a coverage enhancement (CE) characteristic;
wherein the second PRACH resource is a PRACH resource available to a terminal having the CE characteristic.

5. The method according to claim 1, wherein triggering the multi-PRACH transmission according to the triggering condition for the multi-PRACH transmission comprises:
determining whether the multi-PRACH transmission is in an enabled state; and
triggering the multi-PRACH transmission in response to reaching the triggering condition, wherein the triggering condition is that the multi-PRACH transmission is in the enabled state.

6. The method according to claim 5, wherein determining whether the multi-PRACH transmission is in the enabled state comprises:
determining that the multi-PRACH transmission is in the enabled state in response to receiving first indication information from a network device;
wherein the first indication information is used to indicate that the terminal is allowed to perform the multiple PRACH transmission.

7. The method according to claim 5, wherein determining whether the multi-PRACH transmission is in the enabled state comprises:
determining that the multi-PRACH transmission is in the enabled state in response to the terminal being configured with a first PRACH resource or the terminal being configured with a first transmission mode;
wherein the first PRACH resource is configured for the multi-PRACH transmission;
the first transmission mode is configured for the multi-PRACH transmission.

8. The method according to claim 7, wherein the first transmission mode comprises at least one of following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

9. The method according to claim 1, wherein triggering the multi-PRACH transmission according to the triggering condition for the multi-PRACH transmission comprises:
triggering the multi-PRACH transmission in response to reaching the triggering condition, wherein the triggering condition is that a reference signal receiving power (RSRP) value of a downlink pathloss reference point satisfies a first RSRP triggering threshold.

10. The method according to claim 9, wherein the first RSRP triggering threshold is an RSRP triggering threshold configured by a network device for the multi-PRACH transmission.

11. The method according to claim 10, wherein the first RSRP triggering threshold is an RSRP triggering threshold configured by the network device only for the multi-PRACH transmission; or
the first RSRP triggering threshold is an RSRP triggering threshold configured by the network device for both the multi-PRACH transmission and a Msg3 repetition.

12. The method according to claim 9, wherein the first RSRP triggering threshold is an RSRP triggering threshold configured by the network device for a Msg3 repetition of the terminal having a CE characteristic.

13. The method according to claim 10, wherein there are a plurality of first RSRP triggering thresholds, and there are a plurality of BWPs, wherein each BWP is configured with a plurality of first PRACH resources, the first PRACH resource is configured for the multi-PRACH transmission;
wherein the plurality of first RSRP triggering thresholds have a one-to-one correspondence with the plurality of BWPs, or the plurality of first RSRP triggering thresholds have a one-to-one correspondence with the plurality of first PRACH resources.

14. The method according to claim 10, wherein the first RSRP triggering threshold is carried in a system message or in a first radio resource control (RRC) message;
wherein the first RRC message comprises at least one of following RRC messages: an RRCReconfiguration message, an RRCResume message, an RRCRelease message or an RRCSetup message.

15. The method according to claim 10, wherein the first RSRP triggering threshold is carried in at least one of following resource configurations: a common PRACH resource configuration, a PRACH resource configuration corresponding to a characteristic combination or a dedicated PRACH resource configuration;
wherein the characteristic combination comprises a CE characteristic.

16. The method according to claim 15, wherein a type of the random access is a contention-based random access type;
wherein the common PRACH resource configuration comprises a common PRACH resource configuration of at least one BWP;
the dedicated PRACH resource configuration comprises at least one of following configurations: a beam failure recovery (BFR) configuration, or a RACH-ConfigDedicated configuration.

17. The method according to claim 15, wherein a type of the random access is a contention free random access (CFRA) type, and the first RSRP triggering threshold is carried in the dedicated PRACH resource configuration;
wherein the dedicated PRACH resource configuration comprises at least one of following configurations: a CFRA resource configuration for BFR, a CFRA resource configuration for handover or a CFRA resource configuration for primary secondary cell (PSCell) addition or change.

18. The method according to claim 1, wherein triggering the multi-PRACH transmission according to the triggering condition for the multi-PRACH transmission comprises:
triggering the multi-PRACH transmission and a Msg3 repetition in response to reaching the triggering condition, wherein the triggering condition is that an RSRP value of a downlink pathloss reference point satisfies a first RSRP triggering threshold, and the first RSRP triggering threshold is an RSRP triggering threshold configured by a network device for both the multi-PRACH transmission and the Msg3 repetition.

19. The method according to claim 1, wherein triggering the multi-PRACH transmission according to the triggering condition for the multi-PRACH transmission comprises:
determining a triggering occasion of the multi-PRACH transmission; and
triggering the multi-PRACH transmission according to the triggering condition for the multi-PRACH transmission at the triggering occasion.

20. The method according to claim 19, wherein the triggering occasion is any one of following occasions: an occasion after a carrier selection in a random access procedure, an occasion after a BWP selection in a random access procedure, or an occasion after an SSB selection in a random access procedure.

21. The method according to claim 20, wherein the occasion after the BWP selection in the random access procedure comprises any one of following occasions: an occasion before a random access (RA) type selection in the random access procedure, or an occasion after an RA type selection in the random access procedure.

22. The method according to claim 20, wherein the triggering occasion is the occasion after the BWP selection in the random access procedure, the method further comprises:
triggering a Msg3 repetition according to a triggering condition for the Msg3 repetition in response to the triggering condition for the multi-PRACH transmission being used only for the multi-PRACH transmission; or
triggering a Msg3 repetition while triggering the multi-PRACH transmission, in response to the triggering condition for the multi-PRACH transmission being used for an RSRP triggering threshold for both the multi-PRACH transmission and the Msg3 repetition.

23. The method according to claim 20, wherein the triggering occasion is the occasion after the BWP selection in the random access procedure, the method further comprises:
triggering a Msg3 repetition at the triggering occasion according to a triggering condition for the Msg3 repetition before triggering the multi-PRACH transmission according to the triggering condition for the multi-PRACH transmission, in response to the triggering condition for the multi-PRACH transmission being used only for the multi-PRACH transmission; or
triggering a Msg3 repetition while triggering the multi-PRACH transmission, in response to the triggering condition for the multi-PRACH transmission being used for an RSRP triggering threshold for both the multi-PRACH transmission and the Msg3 repetition.

24. A multi-physical random access channel (PRACH) transmission method, performed by a network device, comprising:
receiving Msg1 or MsgA sent by a terminal based on a multi-PRACH transmission;
wherein the multi-PRACH transmission is initiated by the terminal based on a triggering condition.

25. The method according to claim 24, wherein the triggering condition is that a bandwidth part (BWP) initiating a random access is configured with a first PRACH resource;
the first PRACH resource is configured for the multi-PRACH transmission.

26. The method according to claim 25, wherein the triggering condition is that the BWP initiating the random access is configured with the first PRACH resource only; or
the triggering condition is that the first PRACH resource comprises only a second PRACH resource and the terminal has a coverage enhancement (CE) characteristic;
wherein the second PRACH resource is a PRACH resource available to a terminal having the CE characteristic.

27. The method according to claim 24, wherein the triggering condition is that the multi-PRACH transmission is in an enabled state.

28. The method according to claim 27, further comprising:
sending first indication information to the terminal, wherein the first indication information is used to indicate that the terminal is allowed to perform the multi-PRACH transmission.

29. The method according to claim 27, further comprising:
configuring a first PRACH resource for the terminal, or configuring a first transmission mode for the terminal;
wherein the first PRACH resource is configured for the multi-PRACH transmission;
the first transmission mode is configured for the multi-PRACH transmission.

30. The method according to claim 29, wherein the first transmission mode comprises at least one of following modes: a multi-PRACH multiplexing mode using time-division duplexing (TDD), a multi-PRACH multiplexing mode using frequency-division duplexing (FDD), a multi-PRACH multiplexing mode using TDD and FDD, a multi-PRACH transmission mode using a same beam, a multi-PRACH transmission mode using different beams, a mode of allowing the multi-PRACH transmission to span across a single sideband (SSB), or a mode of not allowing the multi-PRACH transmission to span across an SSB.

31. The method according to claim 24, wherein the triggering condition is that a reference signal receiving power (RSRP) value of a downlink pathloss reference point satisfies a first RSRP triggering threshold.

32. The method according to claim 31, further comprising:
configuring, for the terminal, the first RSRP triggering threshold for the multi-PRACH transmission.

33. The method according to claim 32, wherein configuring, for the terminal, the RSRP triggering threshold for the multi-PRACH transmission comprises:
configuring, for the terminal, the first RSRP triggering threshold for the multi-PRACH transmission only; or
configuring, for the terminal, the first RSRP triggering threshold for both the multi-PRACH transmission and a Msg3 repetition.

34. The method according to claim 31, further comprising:
configuring, for the terminal having a CE characteristic, the first RSRP triggering threshold for a Msg3 repetition.

35. The method according to claim 32, wherein there are a plurality of first RSRP triggering thresholds, and there are a plurality of BWPs, wherein each BWP is configured with a plurality of first PRACH resources, the first PRACH resource is configured for the multi-PRACH transmission;
wherein the plurality of first RSRP triggering thresholds have a one-to-one correspondence with the plurality of BWPs, or the plurality of first RSRP triggering thresholds have a one-to-one correspondence with the plurality of first PRACH resources.

36. The method according to claim 32, wherein configuring, for the terminal, the first RSRP triggering threshold for the multi-PRACH transmission comprises:
sending a system message to the terminal, wherein the system message carries the first RSRP triggering threshold; or
sending a first radio resource control (RRC) message to the terminal, wherein the first RRC message carries the first RSRP triggering threshold;
wherein the first RRC message comprises at least one of following RRC messages: an RRCReconfiguration message, an RRCResume message, an RRCRelease message or an RRCSetup message.

37. The method according to claim 32, wherein configuring, for the terminal, the first RSRP triggering threshold for the multi-PRACH transmission comprises:
sending a common PRACH resource configuration to the terminal, wherein the common PRACH resource configuration carries the first RSRP triggering threshold; or
sending a PRACH resource configuration corresponding to a characteristic combination to the terminal, wherein the PRACH resource configuration corresponding to the characteristic combination carries the first RSRP triggering threshold, and the characteristic combination comprises a CE characteristic; or
sending a dedicated PRACH resource configuration to the terminal, wherein the dedicated PRACH resource configuration carries the first RSRP triggering threshold.

38. The method according to claim 37, wherein a type of the random access is a contention-based random access type;
wherein the common PRACH resource configuration comprises a common PRACH resource configuration of at least one BWP;
the dedicated PRACH resource configuration comprises at least one of following configurations: a beam failure recovery (BFR) configuration, or a RACH-ConfigDedicated configuration.

39. The method according to claim 37, wherein a type of the random access is a contention free random access (CFRA) type, and the first RSRP triggering threshold is carried in the dedicated PRACH resource configuration;
wherein the dedicated PRACH resource configuration comprises at least one of following configurations: a CFRA resource configuration for BFR, a CFRA resource configuration for handover or a CFRA resource configuration for primary secondary cell (PSCell) addition or change.

40. A multi-physical random access channel (PRACH) transmission apparatus, applied to a terminal, comprising a processing unit, configured to:
determine a triggering condition for a multi-PRACH transmission; and
trigger the multi-PRACH transmission according to the triggering condition for the multi-PRACH transmission, wherein the multi-PRACH transmission is used to indicate that the terminal performs multiple PRACH transmissions when sending Msg1 or MsgA for a random access.

41. A multi-physical random access channel (PRACH) transmission apparatus, applied to a network device, comprising a transceiver unit, configured to:
receive Msg1 or MsgA sent by a terminal based on a multi-PRACH transmission;
wherein the multi-PRACH transmission is initiated by the terminal based on a triggering condition.

42. A communication apparatus, comprising: a processor, and a memory for storing computer programs, when the computer programs stored in the memory are executed by the processor, the communication apparatus is caused to perform the method according to any one of claims 1 to 23.

43. A communication apparatus, comprising: a processor, and a memory for storing computer programs, when the computer programs stored in the memory are executed by the processor, the communication apparatus is caused to perform the method according to any one of claims 24 to 39.

44. A communication apparatus, comprising: a processor and an interface circuit, wherein
the interface circuit is configured to receive code instructions and transmit the code instructions to the processor; and
the processor is configured to run the code instructions to perform the method according to any one of claims 1 to 23.

45. A communication apparatus, comprising: a processor and an interface circuit, wherein
the interface circuit is configured to receive code instructions and transmit the code instructions to the processor; and
the processor is configured to run the code instructions to perform the method according to any one of claims 24 to 39.

46. A computer-readable storage medium for storing instructions, wherein when the instructions are executed, the method according to any one of claims 1 to 23 is implemented.

47. A computer-readable storage medium for storing instructions, wherein when the instructions are executed, the method according to any one of claims 24 to 39 is implemented.
